# EUROPÄISCHE PATENTSCHRIFT

(11) **EP 1 876 363 B1**
(45) Veröffentlichungstag und Bekanntmachung des Hinweises auf die Patenterteilung: **02.07.2014**
(21) Anmeldenummer: 07018926.1
(22) Anmeldetag: 17.08.2004
(51) Int. Cl.: F16C 1/14, F16C 1/22

(54) **Verstellvorrichtung für eine Bowdenzuganordnung**
Adjusting device for a Bowden cable arrangement
Dispositif de réglage pour un agencement de câble sous gaine

(30) Priorität: 22.08.2003 DE 10338737
(43) Veröffentlichungstag der Anmeldung: 09.01.2008
(62) Teilanmeldung aus: 04764212.9
(73) Patentinhaber: Schukra Gerätebau AG, 2560 Berndorf (AT)
(72) Erfinder: Stössel, Veit, 90409 Nürnberg (DE); Falster, Frank, 90480 Nürnberg (DE); Kopetzky, Robert, 8010 Graz (AT)
(74) Vertreter: Banzer, Hans-Jörg

(56) Entgegenhaltungen:
- EP-A1- 0 774 590

## Beschreibung

Die vorliegende Erfindung betrifft eine Verstellvorrichtung für eine Bowdenzuganordnung, welche insbesondere zum Verstellen der Wölbung einer in einer Lehne eines Sitzes, beispielsweise eines Kraftfahrzeugsitzes, angeordneten Becken-und/oder Lordosenstütze verwendet werden kann. Eine derartige Verstellvorrichtung wird auch als Aktuator oder Spann- bzw. Handschloss bezeichnet, wobei eine Drehbewegung in eine Zug- oder Schubbewegung eines Kabels, Seils oder Drahts der Bowdenzuganordnung umgesetzt wird und dies beispielsweise mit Hilfe eines an dem jeweiligen Sitz angebrachten Handrads oder Hebels erfolgen kann.

Eine derartige Verstellvorrichtung ist beispielsweise aus der EP 0 706 338 B1 der Anmelderin bekannt. Die in dieser Druckschrift vorgeschlagene Verstellvorrichtung umfasst ein in einem Gehäuse axial beweglich geführtes, jedoch drehfest angeordnetes erstes Gewindeteil in Form einer Gewindespindel mit einem Außengewinde, welches sich in Gewindeeingriff mit einem Innengewinde eines zweiten Gewindeteils in Form eines Gewinderings, welcher in dem Gehäuse axialfest und drehbar angeordnet ist, befindet. In dem Gehäuse und in der Gewindespindel ist jeweils eine axiale, miteinander fluchtende zentrale Bohrung für die Durchführung eines Drahts einer Bowdenzuganordnung angeordnet, wobei die zentrale Bohrung der Gewindespindel in einen zu einem Verstellgriff gerichteten Innenraum zur Aufnahme des Nippels des entsprechenden Drahtendes mündet. Darüber hinaus ist in der Seitenwand des Gehäuses eine radiale Öffnung und in der Seitenwand der Gewindespindel eine Querbohrung ausgebildet, wobei die radiale Öffnung des Gehäuses mit der Querbohrung der Gewindespindel bei einer entsprechenden Stellung der Gewindespindel relativ zu dem Gehäuse miteinander fluchten und einen gemeinsamen Durchgang bilden, welcher die Durchführung des Nippels des Drahtendes ermöglicht. Die Öffnung in der Seitenwand des Gehäuses und die Querbohrung in der Seitenwand der Gewindespindel sind mit der jeweiligen zentralen Bohrung durch einen Schlitz verbunden, so dass der Nippel des Drahtendes durch die radiale Öffnung in der Seitenwand des Gehäuses und die entsprechend ausgerichtete Querbohrung in der Seitenwand der Gewindespindel in den Innenraum der Gewindespindel in radialer Richtung eingesetzt werden kann. Anschließend kann der Draht entlang der in dem Gehäuse und in der Gewindespindel ausgebildeten Schlitze in die zentralen Bohrungen bewegt bzw. geschwenkt werden, so dass schließlich der Draht, dessen Drahtende mit dem Nippel in dem Innenraum der Gewindespindel gehalten ist, in axialer Richtung aus der Gewindespindel und dem Gehäuse geführt ist. Der Draht der Bowdenzuganordnung ist in einer Hülle bzw. einem Kabel bewegbar gelagert, wobei sich diese Hülle an einem Ansatz, welcher in axialer Richtung an dem Gehäuse ausgebildet ist, abstützt. Wird der Gewindering gedreht, wird die Gewindespindel mehr oder weniger weit in den Gewindering und in das Gehäuse bewegt, so dass entsprechend der Draht mehr oder weniger weit aus der Hülle der Bowdenzuganordnung herausgezogen wird.

Durch die zuvor beschriebene Ausgestaltung der Verstellvorrichtung gemäß der EP 0 706 338 B1 kann das Einführen des Drahtendes mit dem Nippel und dessen Verankerung in der axial beweglichen Gewindespindel bei vollständig vorgefertigter Bowdenzuganordnung ohne großen Montageaufwand durchgeführt werden. Die Montage der Bowdenzuganordnung an der Verstellvorrichtung ist somit zeit-und kostensparend.

In der EP 0 774 590 B1 ist eine ähnliche Verstellvorrichtung für eine Bowdenzuganordnung nach dem Oberbegriff des Patentanspruchs 1 beschrieben, wobei in dieser Druckschrift vorgeschlagen wird, die radiale Öffnung für die Aufnahme des Drahtendes mit dem Nippel der Bowdenzuganordnung in einem Abschnitt des Außengewindes der Gewindespindel derart auszubilden, dass auch dieser Abschnitt bei einem eingehängten bzw. eingehakten Bowdenzug mit dem Innengewinde des anderen Gewindeteils, welches gemäß dieser Druckschrift durch zwei zusammengesetzte und in das Gehäuse eingepresste Halbschalen gebildet ist, verschraubbar ist.

Bei den zuvor beschriebenen herkömmlichen Verstellvorrichtungen kommt es bei einem Verstellen der Gewindespindel zu einer relativ hohen mechanischen Beanspruchung, und es sind hohe Anforderungen in Bezug auf die zu leistende Verstellkraft gestellt. Trotz deutlicher Verbesserungen ist das Montagekonzept und der logistische Materialfluss zur Fertigung der Verstellvorrichtung bzw. der entsprechenden Einzelteile noch relativ aufwändig.

Sowohl gemäß der EP 0 706 338 B1 als auch gemäß der EP 0 774 590 B1 ist die Hülle des Bowdenzugs an einem in axialer Richtung von dem Gehäuse hervorstehenden Ansatz abgestützt.

Gemäß der EP 0 774 590 B1 handelt es sich insbesondere um einen Ansatz, in dessen Mitte die axiale Bohrung für die Durchführung des Drahts des Bowdenzugs ausgebildet ist, wobei der Ansatz durch einen kreis- oder ringförmigen Vorsprung an der Stirnseite der Verstellvorrichtung gebildet ist, welcher durch den Schlitz, der die axiale Bohrung mit der in der Seitenwand des Gehäuses ausgebildeten radialen Öffnung verbindet, unterbrochen ist. Durch diesen Schlitz ist die Widerstandsfestigkeit des ringförmigen Ansatzes gegen Deformation deutlich geschwächt, so dass bei Betätigung der Verstellvorrichtung bzw. des Bowdenzugs mit der Zeit eine Deformation dieses ringförmigen Ansatzes auftreten kann, welche sogar zum Bruch des Ansatzes bzw. zu einer Beschädigung des gesamten Gehäuses führen kann. Da in der Regel die Hülle des Bowdenzugs in den ringförmigen Vorsprung eingesetzt ist, kann es im Laufe der Zeit auch zu einem "Eingraben" der Hülle des Bowdenzugs, das heißt zu einer entsprechenden Deformation der Hülle, kommen.

Zudem sind gemäß der EP 0 774 590 B1 sowohl im Gewindeabschnitt der Halbschalen als auch im Gewindeabschnitt der damit in Gewindeeingriff stehenden Gewindespindel Anschläge ausgebildet, welche die Bewegung der Gewindespindel in beide axiale Richtungen gegenüber den Halbschalen begrenzen. Durch die Ausbildung dieser Anschläge in den Gewindeabschnitten kann es jedoch bei Anwenden einer übermäßigen Verstellkraft zu einer Beschädigung der Gewindeabschnitte kommen. Zudem sind die Anschläge relativ filigran ausgebildet, so dass sie gegebenenfalls einer relativ hohen Verstellkraft nicht widerstehen können. Zudem kann es bei Aufwenden einer entsprechend hohen Verstellkraft zu einem Ineinandergreifen bzw. Verhaken der entsprechenden Anschläge der Gewindespindel und der Halbschalen kommen.

Ein weiteres Problem bei den herkömmlichen Verstellvorrichtungen ist die Fertigung der Gewindespindel. Zur Fertigung der Gewindespindel muss ein entsprechend ausgebildetes Werkzeug die Spindel umfassen, wobei in demjenigen Bereich der Spindel, wo das Werkzeug zur Ausbildung der Gewindespindel schließt, der Gewindegang der schließlich hergestellten Gewindespindel abgeflacht ist. Dies führt jedoch zu einer Beeinträchtigung der Funktionsweise der Gewindespindel, so dass grundsätzlich das Bedürfnis nach einer Gewindespindel besteht, welche sich einerseits einfach herstellen lässt und andererseits dennoch über eine ausreichende Stabilität und Funktionsfähigkeit verfügt.

Die herkömmlichen Verstellvorrichtungen weisen darüber hinaus ein relativ steifes Gehäusedesign auf, wobei die Materialauswahl für die einzelnen Komponenten primär auf die Schnittstelle zwischen dem Gehäuse und dem Bowdenzugeingang abgestellt ist, da hier in der Regel die größten Belastungen auftreten. Die daraus resultierende Materialauswahl kann jedoch für die restlichen Schnittstellen in der Verstellvorrichtung, beispielsweise zwischen der Gewindespindel und den Halbschalen, ungünstig sein.

Darüber hinaus wird gemäß der EP 0 774 590 B1 die Gewindespindel in dem Gehäuse dadurch geführt, dass an ihrem vorderen Ende zwei diametral in radialer Richtung hervorstehende Nasen in entsprechende in axialer Richtung verlaufende Aussparungen oder Nuten in der Gehäusewand eingreifen. Diese Nuten oder Aussparungen sind durch in Umfangsrichtung des Gehäuses verlaufende steg-oder wandartige Vorsprünge, welche von der Innenwand des Gehäuses hervorstehen, begrenzt und führen zu einer Materialanhäufung im Bereich der Führung der Gewindespindel in dem Gehäuse, was kunststofftechnisch problematisch sein kann und zu einem Wirkungsgradverlust beim Verstellen der Gewindespindel führt. Wie beschrieben kann die Verstellvorrichtung manuell mit Hilfe eines Handrads oder Hebels betätigt werden, wobei aufgrund dieser Materialanhäufung im Bereich der Führung der Gewindespindel in dem Gehäuse einmal schwerer und einmal leichter sein kann, was von dem Benutzer entsprechend in Form einer ungleichmäßig aufzubringenden Verstellkraft wahrgenommen wird.

Wie beschrieben ist bei den bekannten Verstellvorrichtungen der an dem eingeführten Drahtende befindliche Nippel in den Innenraum der Gewindespindel eingesetzt. Nach Einsetzen des Nippels verläuft der Draht der Bowdenzuganordnung in axialer Richtung von dem Innenraum der Gewindespindel über die axialen Bohrungen in der Gewindespindel und dem Gehäuse nach außen. Während der Betätigung der Verstellvorrichtung bzw. der Bowdenzuganordnung kann es jedoch zu einer Veränderung der Lage des Nippels innerhalb des Innenraums der Spindel kommen, wobei insbesondere der Nippel auch an der den Innenraum der Gewindespindel begrenzenden Innenwand der Gewindespindel anliegen kann, was zu einer Beeinträchtigung des Wirkungsgrads aufgrund von Reibung führen kann. Darüber hinaus kann durch die Tatsache, dass in diesem Fall die Verstellkraft auf die Bowdenzuganordnung nicht exakt in axialer Richtung übertragen wird, ein Verkippen der Gewindespindel innerhalb des Gehäuses der Verstellvorrichtung die Folge sein, was wiederum den Wirkungsgrad beeinträchtigt und sogar zu einer Beschädigung der Gewindespindel und des Gehäuses führen kann.

Ein generelles Designproblem bei Verstellvorrichtungen der zuvor beschriebenen Art ist auch die Bewerkstelligung eines möglichst ruhigen und gleichmäßigen Laufs der Gewindespindel innerhalb der Verstellvorrichtung. Insbesondere soll zum axialen Verstellen der Gewindespindel eine möglichst gleichmäßige Verstellkraft erforderlich sein, wobei es beim Verstellen der Gewindespindel nicht zu ruckartigen Widerständen kommen sollte. Das Ausbilden von Anschlagkanten unmittelbar in den Gewindeabschnitten der Gewindespindel bzw. der Halbschalen gemäß der EP 0 774 590 B1, insbesondere in Verbindung mit einer seitlichen Abflachung des Gewindegangs der Gewindespindel, kann jedoch zu einem relativ unruhigen Lauf der Gewindespindel führen.

Wie bereits beschrieben stellt auch die Fertigung der Gewindespindel ein spezielles Problem dar. Bei der Fertigung der Gewindespindel wird ein Schieber in das Innere der Spindel eingeschoben, wobei hier eine möglichst konzentrische Lage der Spindel gegenüber dem entsprechenden Werkzeug für eine möglichst filigrane Fertigung der Gewindespindel notwendig ist. Bei herkömmlichen Gewindespindeln ist jedoch das Halten der Spindel während des Einschiebens des Schiebers sowie während der Ausbildung des Außengewindes nicht gewährleistet.

Aus der obigen Beschreibung ist ersichtlich, dass an Verstellvorrichtungen für Bowdenzuganordnungen der zuvor beschriebenen Art eine Vielzahl unterschiedlicher Anforderungen gestellt werden. Diesen unterschiedlichen Anforderungen ist jedoch gemeinsam, einen möglichst ruhigen Lauf der Gewindespindel bei gleichzeitig optimiertem Wirkungsgrad und einfacher Herstellbarkeit der Verstellvorrichtung zu erzielen.

Der vorliegenden Erfindung liegt daher die Aufgabe zu Grunde, die zuvor beschriebenen Probleme zu beseitigen und eine Verstellvorrichtung für eine Bowdenzuganordnung bereitzustellen, bei welcher die Funktionsfähigkeit der Verstellvorrichtung verbessert ist, und bei welcher insbesondere eine möglichst einfache Herstellbarkeit der Verstellvorrichtung bei gleichzeitig verbessertem Wirkungsgrad und verbesserten Verstelleigenschaften der einzelnen Gewindeteilen der Verstellvorrichtung gegeben ist.

Diese Aufgabe wird erfindungsgemäß durch eine Verstellvorrichtung für eine Bowdenzuganordnung mit den Merkmalen des Patentanspruchs 1 gelöst. Die abhängigen Ansprüche definieren jeweils bevorzugte und vorteilhafte Ausführungsformen der vorliegenden Erfindung.

Die erfindungsgemäße Verstellvorrichtung eignet sich vorzugsweise als Verstellvorrichtung für eine Bowdenzuganordnung zur Verstellung der Wölbung einer Becken- und/oder Lordosenstütze in einer Rückenlehne eines Sitzes, beispielsweise eines Kraftfahrzeugsitzes. Die erfindungsgemäße Verstellvorrichtung ist jedoch nicht auf diesen bevorzugten Anwendungsbereich beschränkt und kann darüber hinaus sowohl manuell als auch elektrisch betätigt werden.

Die vorliegende Erfindung wird nachfolgend näher unter Bezugnahme auf die Zeichnung anhand eines bevorzugten Ausführungsbeispiels erläutert.
Figur 1 und Figur 2 zeigen perspektivische Ansichten einer Verstellvorrichtung für eine Bowdenzuganordnung gemäß einem bevorzugten Ausführungsbeispiel der Erfindung im zusammengebauten Zustand,
Figur 3 zeigt eine Draufsicht auf die Verstellvorrichtung von oben im zusammengebauten Zustand,
Figur 4 zeigt eine Draufsicht auf die Verstellvorrichtung von unten im zusammengebauten Zustand,
Figur 5 zeigt eine Vorderansicht der Verstellvorrichtung im zusammengebauten Zustand,
Figur 6 zeigt eine Seitenansicht der Verstellvorrichtung im zusammengebauten Zustand,
Figur 7 zeigt eine perspektivische Ansicht eines Gehäuses der Verstellvorrichtung von Figur 1-6,
Figur 8 zeigt eine Draufsicht auf das Gehäuse von oben,
Figur 9 zeigt eine Draufsicht auf das Gehäuse von unten,
Figur 10 zeigt eine Vorderansicht des Gehäuses,
Figur 11 zeigt eine Seitenansicht des Gehäuses,
Figur 12 zeigt eine Draufsicht auf eine Hülse für die Verstellvorrichtung von Figur 1 - Figur 6 von unten,
Figur 13 zeigt eine Seitenansicht der Hülse,
Figur 14 zeigt eine Draufsicht auf die Hülse von oben,
Figur 15 zeigt eine perspektivische Ansicht der Hülse,
Figur 16 zeigt eine perspektivische Ansicht einer Halbschale der Verstellvorrichtung von Figur 1 - Figur 6,
Figur 17 zeigt eine Vorderansicht der Halbschale,
Figur 18 zeigt eine Seitenansicht der Halbschale,
Figur 19 zeigt eine Draufsicht auf die Halbschale von oben,
Figur 20 zeigt eine Draufsicht auf die Halbschale von unten,
Figur 21 zeigt eine Vorderansicht einer Gewindespindel der Verstellvorrichtung von Figur 1 - Figur 6,
Figur 22 zeigt eine perspektivische Ansicht der Gewindespindel,
Figur 23 zeigt eine Rückansicht der Gewindespindel,
Figur 24 zeigt eine Seitenansicht der Gewindespindel,
Figur 25 zeigt eine Draufsicht auf die Gewindespindel von unten, und
Figur 26 zeigt eine Draufsicht auf die Gewindespindel von oben.

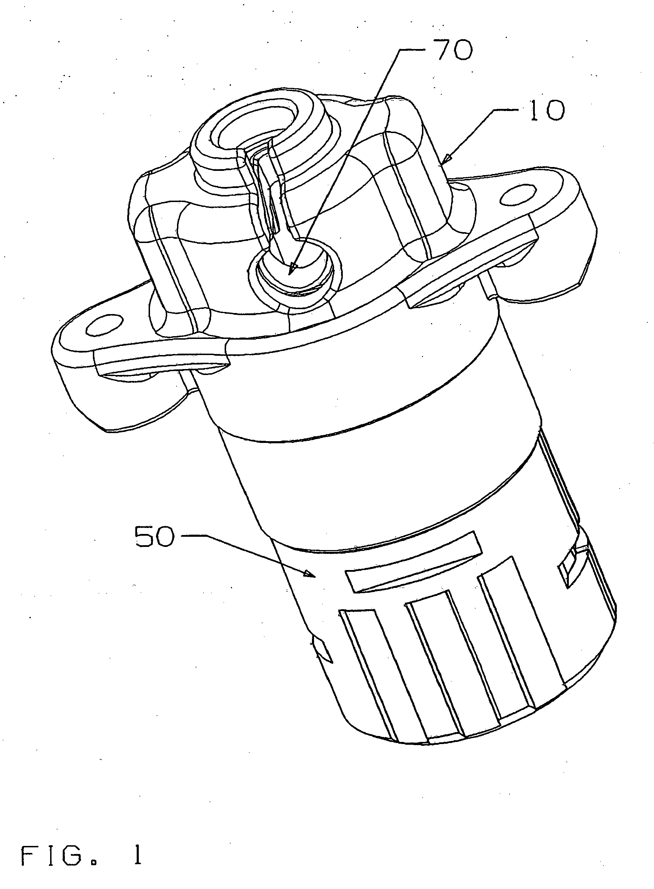

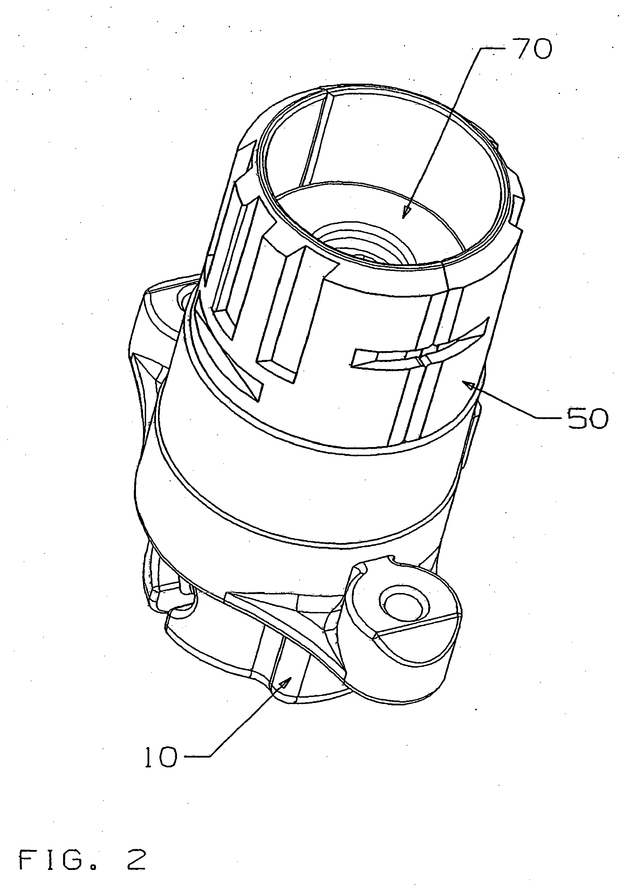

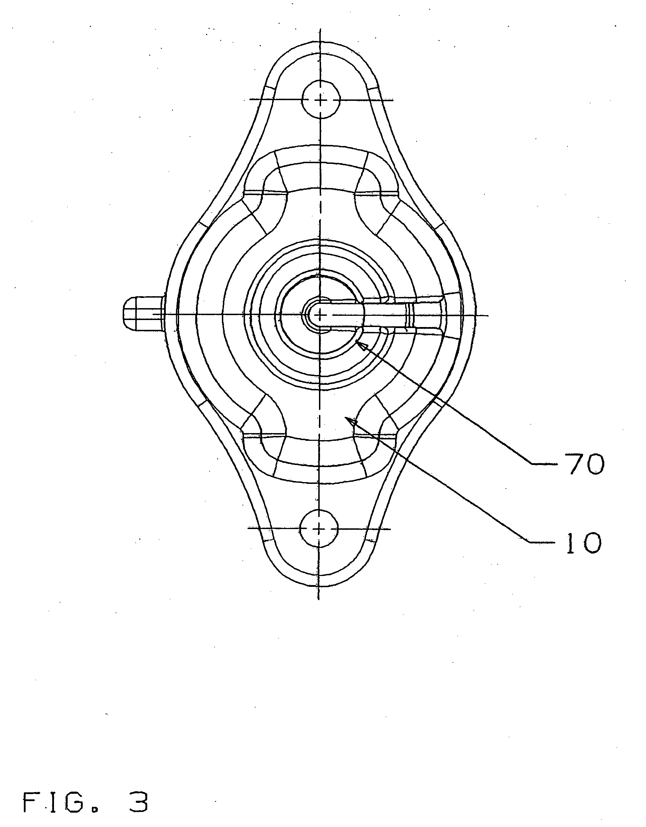

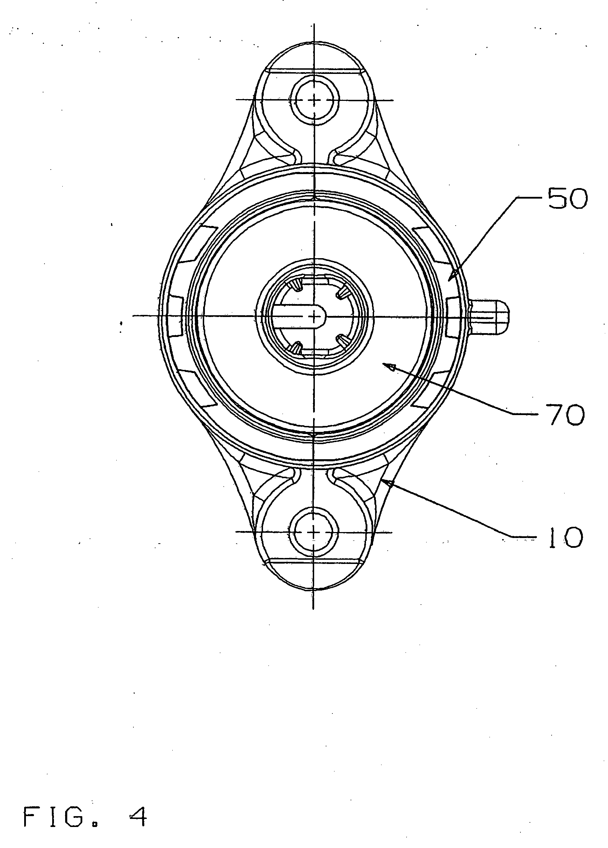

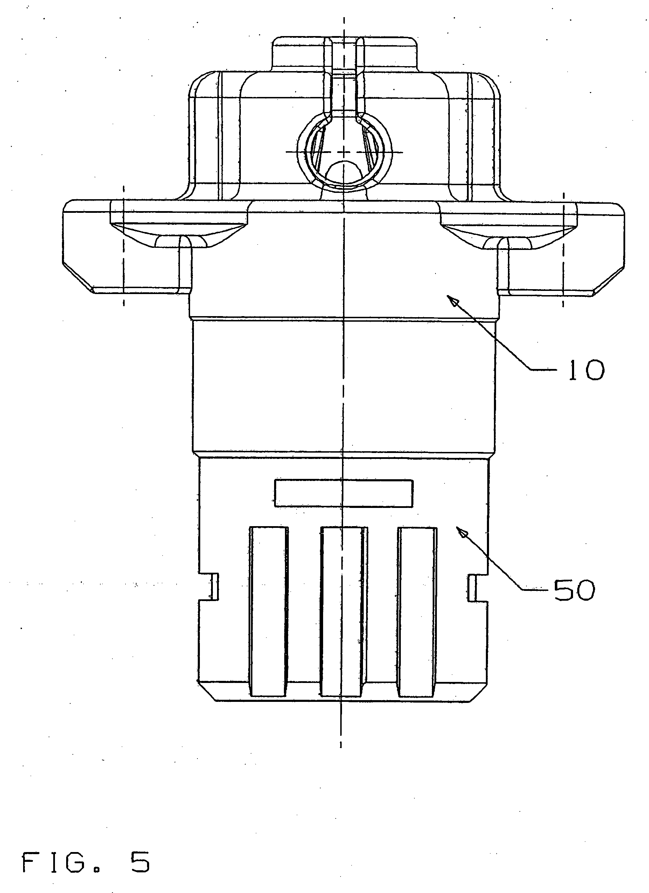

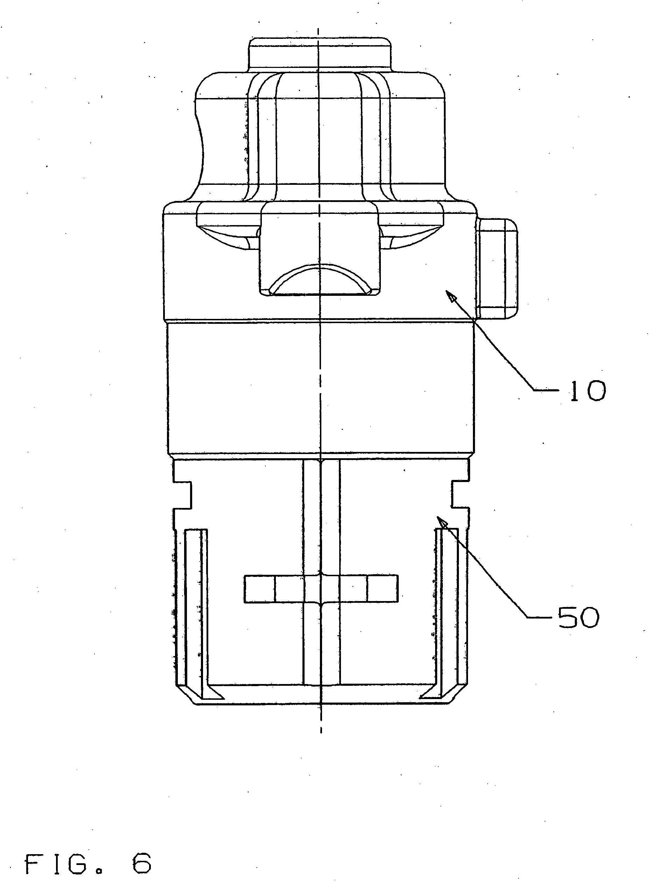

Die in Figur 1 - Figur 6 dargestellte Verstellvorrichtung dient zum Verstellen einer (nicht gezeigten) Bowdenzuganordnung, genauer gesagt eines in einer Hülle der Bowdenzuganordnung verschiebbar gelagerten Drahts. Die wesentlichen Bestandteile der Verstellvorrichtung, welche auch als Spindel- oder Spannschloss bzw. bei manueller Betätigung als Handschloss bezeichnet werden kann, sind ein Gehäuse 10, zwei Halbschalen 50, welche im zusammengesetzten Zustand einen hohlzylinderförmigen Körper bilden, und eine Gewindespindel 70. Die beiden Halbschalen 50 sind in dem Gehäuse 10 axialfest und drehbar angeordnet, während die Gewindespindel 70 in dem Gehäuse drehfest und axial beweglich geführt ist. Die Gewindespindel 70 ist mit der Bowdenzuganordnung bzw. dem Draht der Bowdenzuganordnung zu koppeln, so dass abhängig von der axialen Bewegung der Gewindespindel 70 innerhalb des Gehäuses 10 und innerhalb der Halbschalen 50 der Draht der Bowdenzuganordnung mehr oder weniger weit in das Gehäuse 10 hineingezogen wird. Dieser Sachverhalt kann beilspielsweise ausgenutzt werden, um eine mit dem anderen Ende des Drahts der Bowdenzuganordnung gekoppelte Lordosenstütze in ihrer Wölbung zu verstellen. Diesbezüglich sind bereits verschiedene Lösungen zur Verstellung der Wölbung einer Lordosenstütze mittels einer Bowdenzuganordnung aus dem Stand der Technik bekann, so dass an dieser Stelle nicht näher darauf eingegangen werden muss.

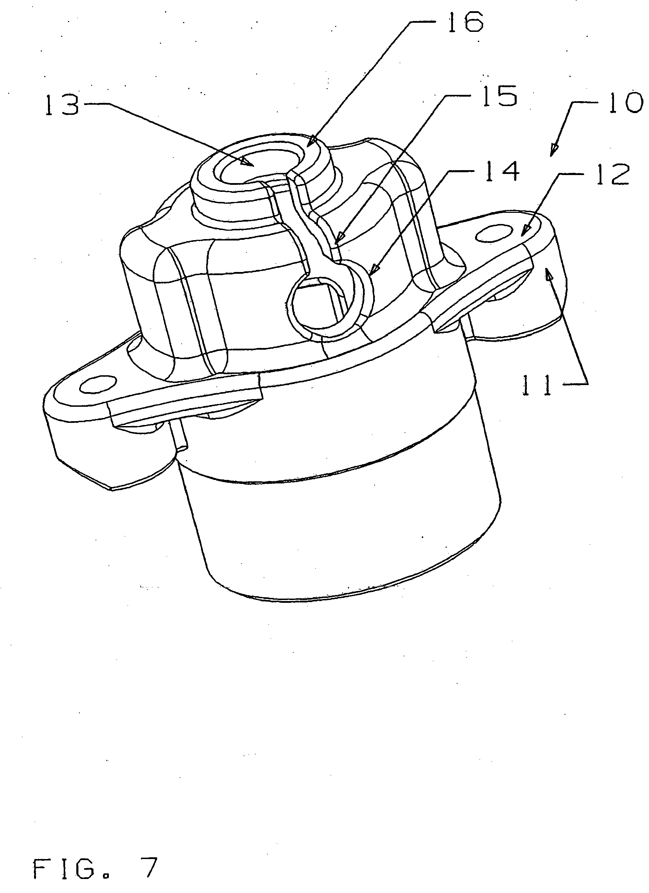

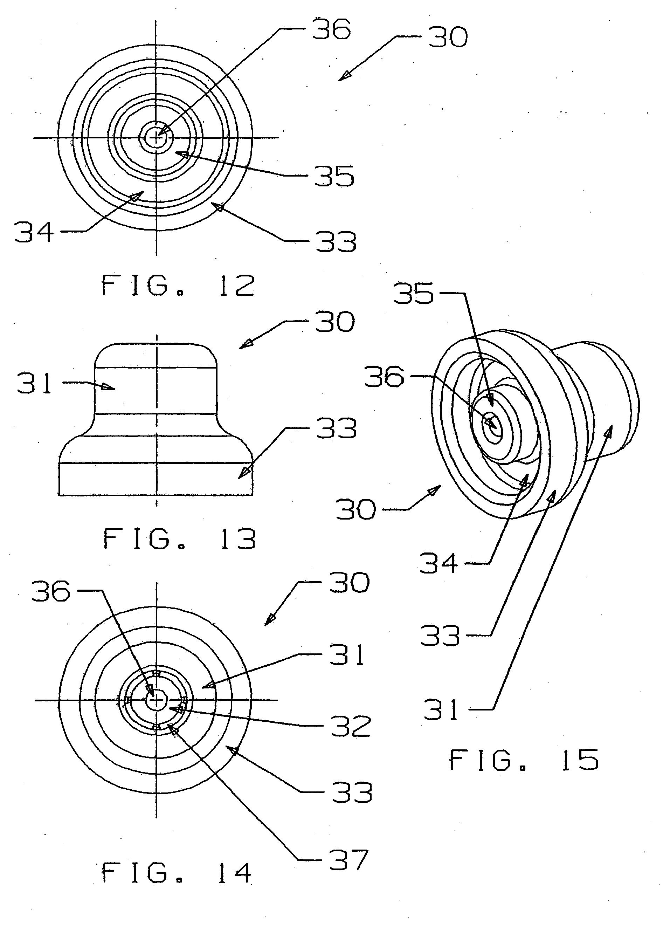

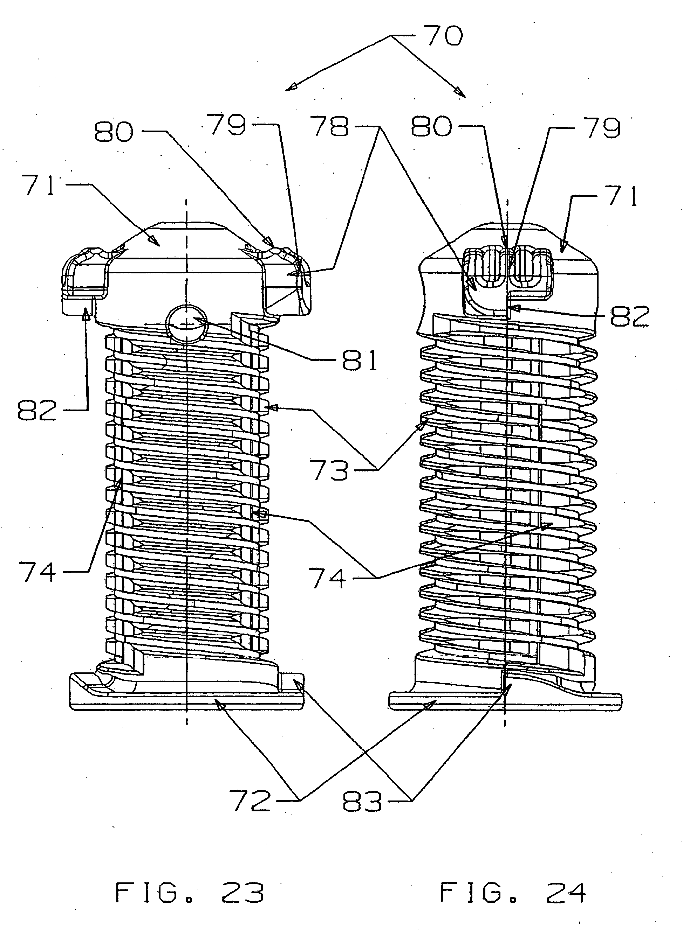

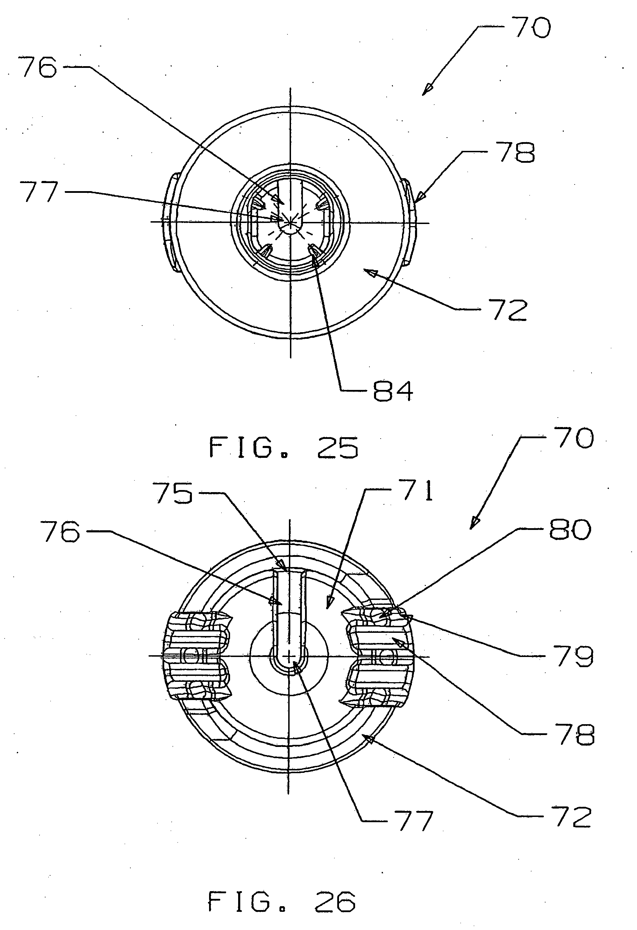

Der in Figur 1 - Figur 6 dargestellten Verstellvorrichtung ist darüber hinaus eine in diesen Figuren nicht dargestellte Hülse zugeordnet, welche im Detail in Figur 12 - Figur 15 gezeigt und auf einen im Wesentlichen ringförmigen Ansatz des Gehäuses 10 aufzusetzen ist. Die einzelnen Bestandteile der Verstellvorrichtung von Figur 1 - Figur 6 sowie die Hülse werden nachfolgend näher unter Bezugnahme auf Figur 7 - Figur 26 erläutert.

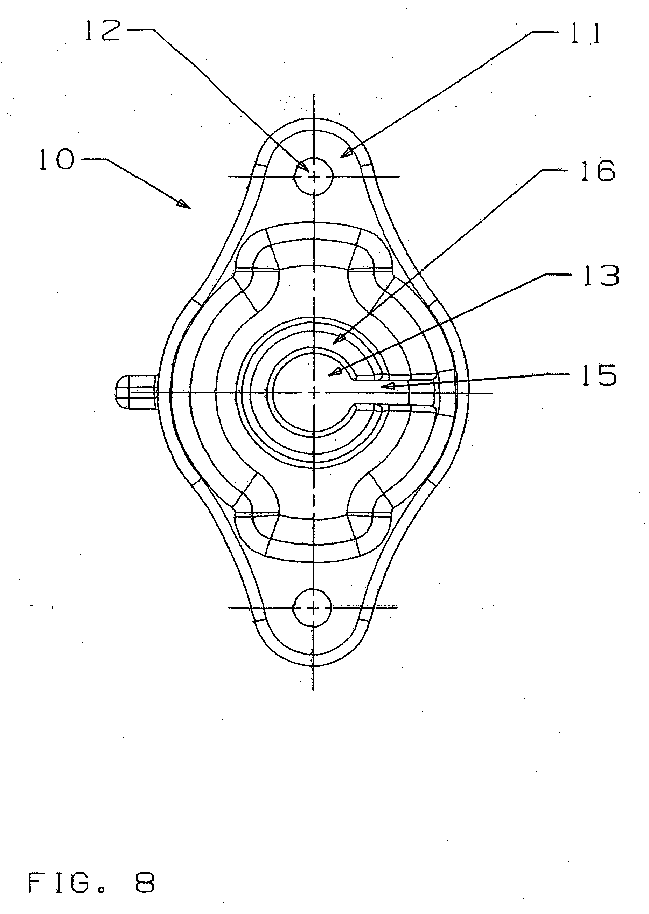

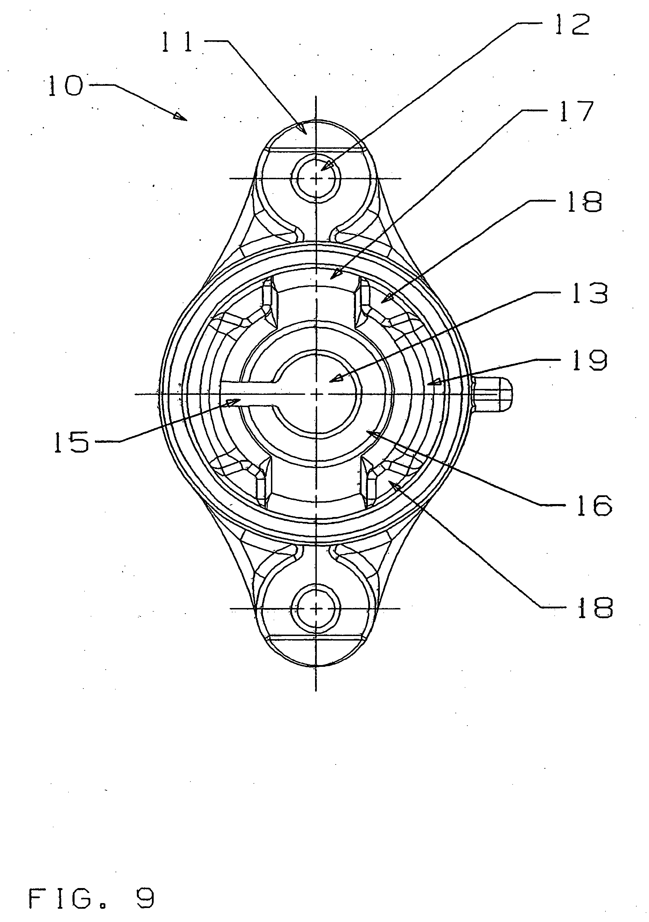

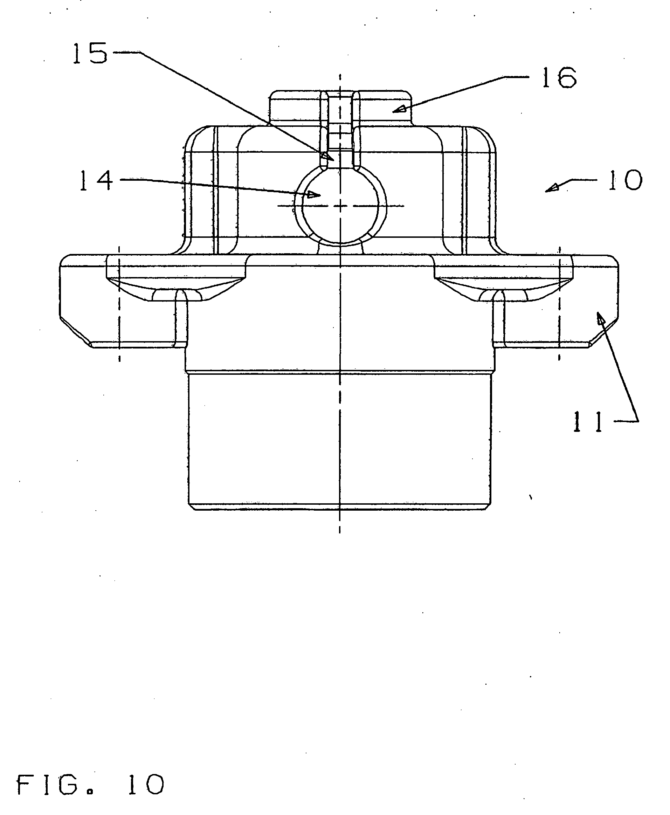

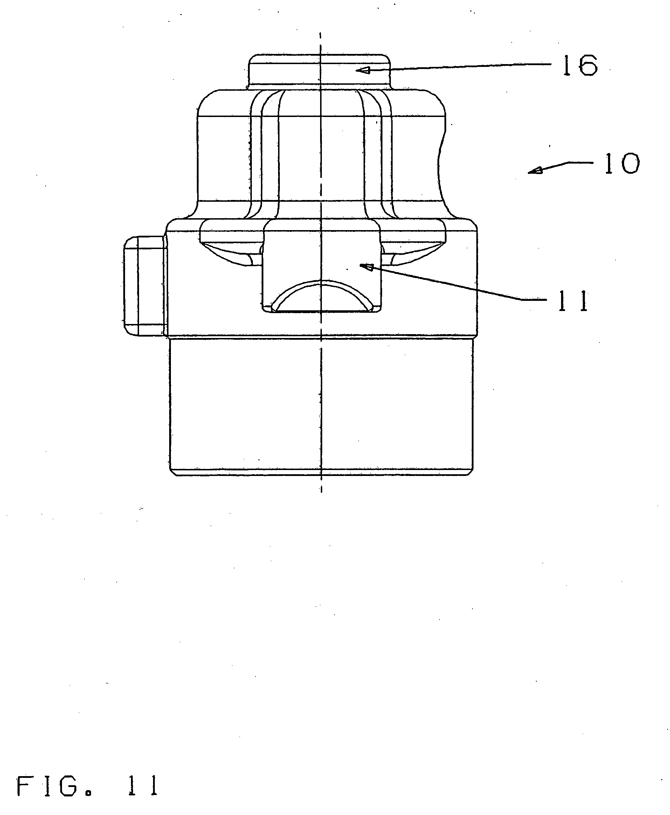

Figur 7 zeigt eine perspektivische Ansicht des Gehäuses 10, während Figur 8 eine Draufsicht auf das Gehäuse 10 von oben, Figur 9 eine Draufsicht auf das Gehäuse 10 von unten, Figur 10 eine Vorderansicht des Gehäuses 10 und Figur 11 eine Seitenansicht des Gehäuses 10 darstellen.

Das Gehäuse 10 ist einteilig aus einem Polyamid-Kunststoff, gegebenenfalls mit Glasfaseranteil, gefertigt. Das Gehäuse 10 besitzt eine im Wesentlichen hohlzylindrische Form, wobei von der Seitenwand des Gehäuses 10 zwei flanschartige Vorsprünge 11 mit Befestigungslöchern 12 ausgebildet sind, welche diametral von der Seitenwand des Gehäuses 10 nach außen hervorstehen. Mit Hilfe dieser flanschartigen Vorsprünge 11 bzw. der darin ausgebildeten Befestigungslöcher 12 kann das Gehäuse 10 (mit den darin befindlichen Halbschalen 50, der darin befindlichen Gewindespindel 70 und der auf das Gehäuse 10 aufgesetzten Hülse 30) an einem gewünschten Objekt, beispielsweise einem Kraftfahrzeugsitz, befestigt werden. In der Seitenwand des Gehäuses 10 ist darüber hinaus eine radiale Öffnung 14 ausgebildet, welche über einen in der Seitenwand ebenfalls ausgebildeten Schlitz 15 mit einer axialen Öffnung 13 des Gehäuses 10 in Verbindung steht. Die axiale Öffnung 13 des Gehäuses 10 ist durch einen ringförmigen Ansatz 16 definiert, welcher in axialer Richtung von der Stirnfläche bzw. der axialen Endfläche des Gehäuses 10 hervorsteht. Der Schlitz 15 verläuft auch durch diesen ringförmigen Ansatz oder Vorsprung 16.

Die radiale Öffnung 14 dient dazu, um einen an dem entsprechenden Drahtende der Bowdenzuganordnung angebrachten Nippel durch diese radiale Öffnung 14 einzuführen, wobei anschließend der Draht der Bowdenzuganordnung durch den Schlitz 15 in die axiale Öffnung 13 bewegt wird, so dass der Draht vom Inneren des Gehäuses 10 durch die axiale Öffnung 13 in Längsrichtung des Gehäuses 10 nach außen verläuft.

Die in Figur 9 gezeigte Draufsicht auf das Gehäuse 10 von unten macht deutlich, dass im Inneren des Gehäuses 10 Vorsprünge 18 ausgebildet sind, welche von der Innenwand des Gehäuses 10 in radialer Richtung hervorstehen. Diese Vorsprünge 18 definieren in Längsrichtung verlaufende Führungsnuten 17, in welche nasenartige Vorsprünge 78 der Gewindespindel 70 eingesetzt werden können, um die Gewindespindel 70 in Längsrichtung entlang dieser Führungsnuten 17 innerhalb des Gehäuses 10 bewegen zu können.

Aus Figur 9 ist auch ersichtlich, dass die in Umfangsrichtung des Gehäuses 10 jeweils benachbarten radialen Vorsprünge 18 nicht über ihre gesamte axiale Länge miteinander in Umfangsrichtung verbunden sind. Stattdessen sind zwischen jeweils zwei in Umfangsrichtung benachbarten radialen Vorsprüngen 18 Materialaussparungen 19 vorgesehen, wobei diese Materialaussparungen 19 sich lediglich teilweise über die axiale Länge der radialen Vorsprünge 18 oder auch über die gesamte axiale Länge der radialen Vorsprünge 18 erstrecken können, wobei im letztgenannten Fall die in Umfangsrichtung des Gehäuses 10 benachbarten radialen Vorsprünge 18 vollständig voneinander entlang ihrer gesamten axialen Länge getrennt sind. Durch diese Materialaussparungen 19, welche somit verhindern, dass sich die radialen Vorsprünge 18 ring- oder wandartig über eine größere Fläche der Innenwand des Gehäuses 10 erstrecken, ist gewährleistet, dass überschüssiges Material im Bereich der Führung der Gewindespindel 70 weggelassen wird, um unnötige Materialansammlungen, welche kunststofftechnisch problematisch sein können, zu vermeiden. Unabhängig von den daraus resultierenden billigeren Herstellungskosten tritt hierdurch auch eine Wirkungsgradverbesserung ein, da durch unnötige Materialansammlungen im Bereich der Führung der Gewindespindel 70 es häufig zu Widerständen beim Einführen der Gewindespindel 70 bzw. der entsprechenden nasenartigen Vorsprünge 78 in die Führungsnuten 17 kommen kann.

Bei dem in Figur 9 gezeigten Ausführungsbeispiel sind die radialen Vorsprünge 18, welche die axialen Führungsnuten 17 definieren, im Querschnitt im Wesentlichen trapezförmig. Im Prinzip können jedoch die Vorsprünge 18 jede beliebige Form aufweisen und auch mit einer geringeren Dicke ausgestaltet sein, solange eine zuverlässige Führung der Gewindespindel 70 in den Führungsnuten 17 gewährleistet ist. Des Weiteren genügt es, wenn die radialen Vorsprünge 18 im Bereich des stirnseitigen Endabschnitts des Gehäuses 10 im Inneren desselben ausgebildet sind, da die Gewindespindel 70 - wie nachfolgend noch näher erläutert wird - am entgegengesetzten Längsende des Gehäuses 10 ausreichend durch die Halbschalen 50 gehalten ist.

Nachfolgend soll näher die in Figur 12 - Figur 15 dargestellte Hülse, welche auf den ringförmigen Ansatz bzw. Vorsprung 16 des Gehäuses 10 aufzusetzen ist, erläutert werden. Dabei zeigt Figur 12 eine Draufsicht auf die Hülse 30 von unten, Figur 13 zeigt eine Seitenansicht der Hülse 30, Figur 14 zeigt eine Draufsicht auf die Hülse 30 von oben, und Figur 15 zeigt eine perspektivische Ansicht der Hülse 30.

Die Hülse 30 umfasst im Wesentlichen einen Aufnahmeabschnitt 31 und einen Basis- oder Randabschnitt 33, welche an den beiden Längsenden der Hülse 30 ausgebildet sind. Die Hülse 30 ist zu ihrer Längsmittelachse im Wesentlichen rotationssymmetrisch und glockenförmig aufgebaut.

Der Aufnahmeabschnitt 31 weist eine in Längsrichtung verlaufende Öffnung auf, in welche die Hülle der Bowdenzuganordnung einzuführen ist. Die Abmessungen der Öffnung 32 entsprechen dabei im Wesentlichen den Abmessungen der Hülle der Bowdenzuganordnung, wobei darüber hinaus - wie aus Figur 14 ersichtlich ist - von der Innenwand gleichmäßig in Umfangsrichtung angeordnete Rippen in radialer Richtung hervorstehen können, um die Hülle der Bowdenzuganordnung in der Öffnung 32 zu fixieren.

Wie aus Figur 15 ersichtlich ist, erstreckt sich vom unteren Ende des Aufnahmeabschnitts 31 in Längsrichtung ein ringförmiger Vorsprung 35, wobei im mittleren Bereich dieses ringförmigen Vorsprungs 35 ein Durchgangsloch 36 ausgebildet ist, durch welches der in der Hülle bewegbar gelagerte Draht geführt werden kann. Die dem Aufnahmeabschnitt 31 zugewandte Oberfläche des ringförmigen Vorsprungs 35 dient zugleich als Anschlagfläche für die Hülle der Bowdenzuganordnung, das heißt die Hülle kann in die Öffnung 32 bis zum Boden der ringförmigen Vertiefung 35 eingeführt werden.

Der Randabschnitt 33 der Hülse 30 ist - wie ebenfalls aus Figur 15 ersichtlich ist - im Wesentlichen ringförmig und von dem ringförmigen Vorsprung 35 durch eine ebenfalls im Wesentlichen ringförmige Vertiefung oder Nut 34 getrennt. Die Form und die Abmessungen der Vertiefung 34 sind dabei im Wesentlichen komplementär zu der Form und der Vertiefung des ringförmigen Vorsprungs 16 des Gehäuses 10 gewählt. Im Gegensatz zu dem ringförmigen Vorsprung 16 des Gehäuses 10 ist jedoch der ebenfalls im Querschnitt im Wesentlichen kreisförmige Randabschnitt 33 geschlossen. Auch der ringförmige Vorsprung 35 und die ringförmige Vertiefung 34 sind im Querschnitt im Wesentlichen kreisförmig.

In der Praxis wird die Hülle der Bowdenzuganordnung in die Öffnung 32 des Aufnahmeabschnitts 31 der Hülse 30 eingeführt, und der Draht der Bowdenzuganordnung wird durch das Durchgangsloch 36 geführt. Anschließend wird das entsprechende Drahtende mit dem daran angebrachten Nippel wie beschrieben durch die radiale Öffnung 14 in der Seitenwand des Gehäuses 10 (sowie eine in der Gewindespindel 70 entsprechend ausgebildete radiale Öffnung 75, welche nachfolgen noch näher erläutert wird) eingeführt und dort mit der Gewindespindel 70 gekoppelt. Der Draht wird anschließend durch den Schlitz 15 in der Seitenwand des Gehäuses 10 (und einen entsprechend ausgebildeten Schlitz 76 in der Seitenwand der Gewindespindel 70) in die axiale Öffnung 13 des Gehäuses 10 (und eine entsprechend ausgebildete axiale Öffnung 77 der Gewindespindel 70) bewegt, so dass er in Längsrichtung des Gehäuses 10 und der Gewindespindel 70 verläuft. Anschließend wird die Hülse 30 auf den axialen Vorsprung 16 des Gehäuses 10 geschoben oder aufgesetzt, wobei der Randabschnitt 33 sowie die durch den ringförmigen Vorsprung 35 und den Randabschnitt 33 definierte ringförmige Vertiefung 34 derart ausgebildet sind, dass der axiale Vorsprung 16 des Gehäuses 10 möglichst exakt in diese ringförmige Vertiefung 34 der Hülse 30 passt und zwischen dem Randabschnitt 33 und dem ringförmigen Vorsprung 35 der Hülse 30 formschlüssig gehalten wird. Insbesondere umgibt der Randabschnitt 33 vollständig den axialen Vorsprung 16 des Gehäuses 10, so dass auch bei Anwenden größerer Verstellkräfte auf die Bowdenzuganordnung und demzufolge auch auf die Hülle der Bowdenzuganordnung der in dem Vorsprung 16 ausgebildete Schlitz 15 zusammengehalten wird und sich nicht ausweiten kann. Der axiale Vorsprung 16 des Gehäuses 10 ist somit gegen Deformation geschützt. Ebenso kann ein "Eingraben" oder Verziehen der Hülle der Bowdenzuganordnung zuverlässig vermieden werden, da die Hülle der Bowdenzuganordnung wie beschrieben in der Öffnung 32 des Aufnahmeabschnitts 31 der Hülse 30 befindlich ist und dort ebenfalls formschlüssig durch die Innenwand der Öffnung 32 bzw. die dort ausgebildeten radialen Rippen 37 und die im Wesentlichen senkrecht zur Längsachse der Hülse 30 verlaufende Anschlagfläche am Boden des ringförmigen Vorsprungs 35 gehalten ist.

Die Hülse 30 kann wie das Gehäuse 10 aus einem Polyamid-Kunststoff, beispielsweise Polyamid 6/6.6, gefertigt sein, wobei die Hülse vorzugsweise glasfaserverstärkt sein sollte, um die Stabilität und Festigkeit der Hülse 30 zu verbessern.

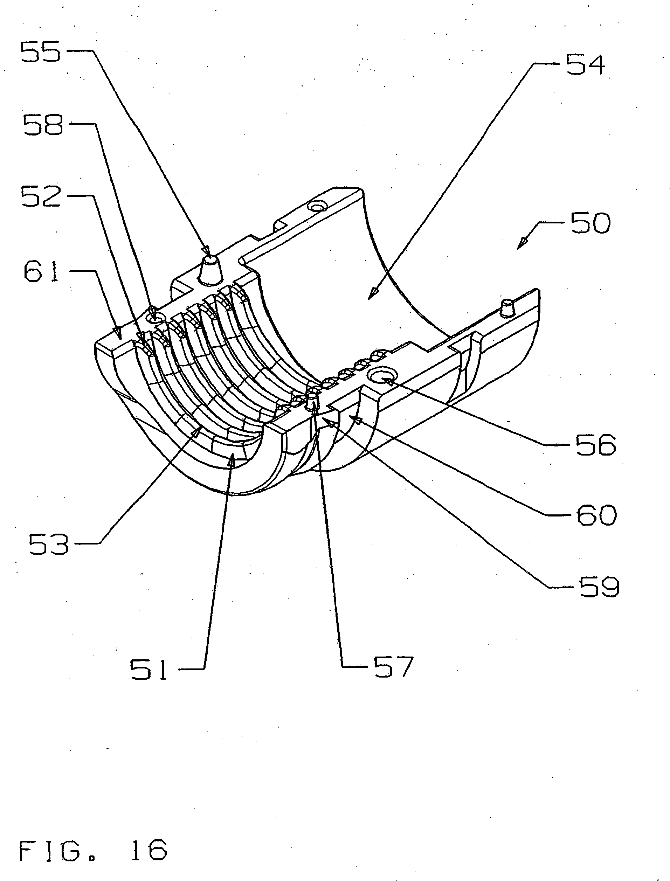

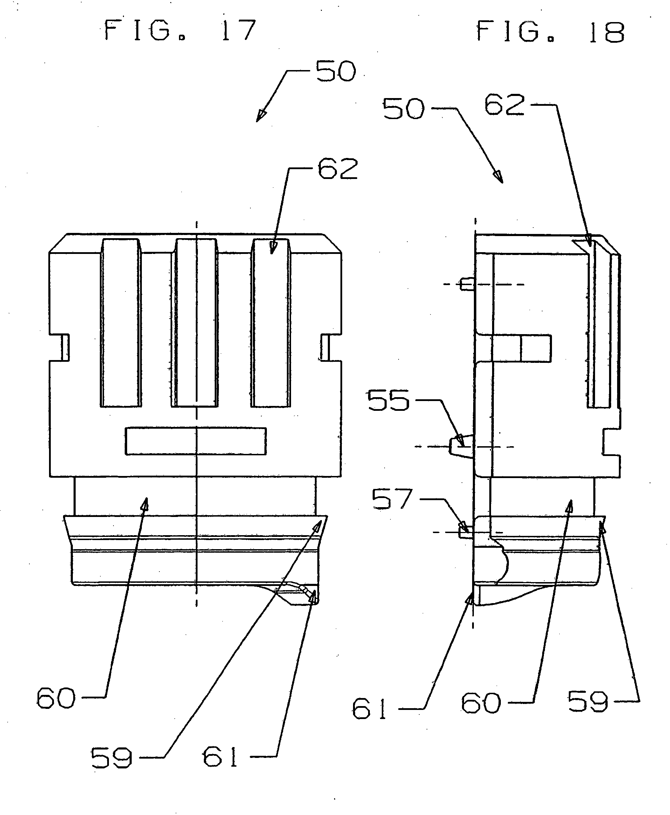

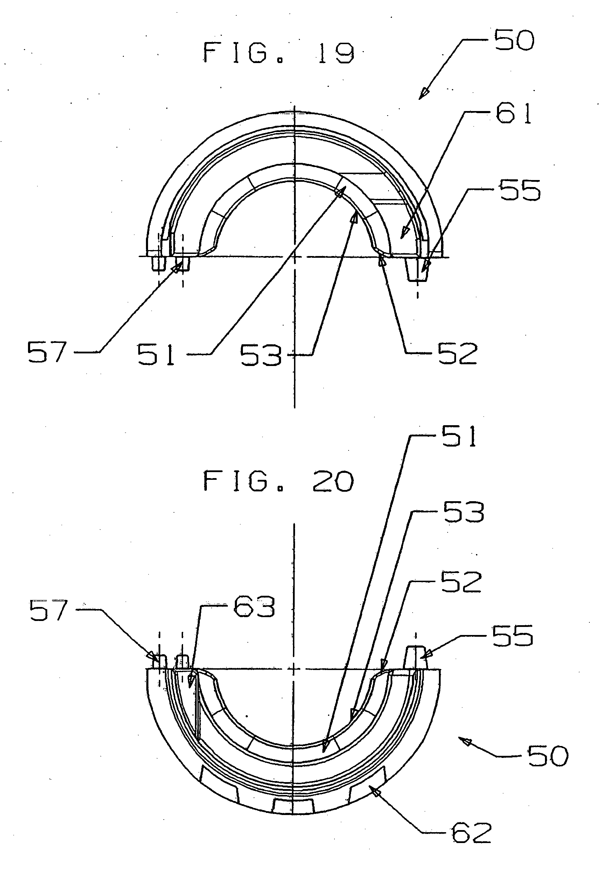

Nachfolgend werden die beiden Halbschalen 50 der in Figur 1 - Figur 6 gezeigten Verstellvorrichtung näher erläutert. Dabei ist in Figur 16 eine perspektivische Ansicht einer der Halbschalen 50 dargestellt, während Figur 17 eine Vorderansicht der Halbschale 50, Figur 18 eine Seitenansicht der Halbschale 50, Figur 19 eine Draufsicht auf die Halbschale 50 von oben, und Figur 20 eine Draufsicht auf die Halbschale 50 von unten darstellt.

Wie aus Figur 16 ersichtlich ist, ist jede der beide Halbschalen 50 im Wesentlichen halbzylinderförmig und weist an ihrem einen Längsende einen Abschnitt mit einem Innengewinde 51 und an ihrem anderen Längsende einen Hohlraum 54 auf, in dem eine nachfolgend noch näher erläuterte Basis 72 der Gewindespindel 70 in axialer Richtung geführt ist. Das Innengewinde jeder Halbschale 50 ist - wie aus Figur 16 ersichtlich ist - sowohl in radialer Richtung mit Abrundungen 53 als auch seitlich im Bereich der Trennflächen mit Abrundungen 52 versehen. Werden die beiden Halbschalen 50 an ihren Trennflächen zusammengesetzt, ermöglichen die Abrundungen bzw. Radien 52, 53 einen runden Lauf der Gewindespindel 70 innerhalb der Halbschalen 50, wobei insbesondere durch die im Bereich der Trennflächen vorgesehenen seitlichen Abrundungen 52 ein scharfer Übergang zwischen den Innengewindeabschnitten der beiden Halbschalen 50 vermieden wird, so dass die Gewindespindel 70 ohne wesentlichen Widerstand in die Halbschalen 50 und das Gehäuse 10 eingeschraubt bzw. herausgeschraubt werden kann.

Jede Trennfläche jeder Halbschale 50 weist eine Kombination aus einem Vorsprung und einer Vertiefung auf. Dabei ist aus Figur 16 ersichtlich, dass die eine Trennfläche jeder Halbschale 50 einen relativ großen Vorsprung 55 aufweist, während die andere Trennfläche einen relativ kleinen Vorsprung 57 besitzt. Darüber hinaus weist die erstgenannte Trennfläche eine Vertiefung 58 zur Aufnahme des relativ kleinen Vorsprungs 57 der anderen Halbschale auf, während die andere Trennfläche jeder Halbschale 50 benachbart zu dem relativ kleinen Vorsprung 57 eine Vertiefung 56 zur Aufnahme des relativ großen Vorsprungs 55 der anderen Halbschale 50 besitzt. Die Reihenfolge zwischen Vorsprung und Vertiefung ist auf beiden Trennflächen jeder Halbschale 50 vertauscht, so dass bei Zusammensetzen der beiden Halbschalen 50 die beiden Halbschalen 50 sicher zueinander in Position gehalten werden können und den geschlossenen hohlzylindrischen Körper zur Aufnahme der Gewindespindel 70 bilden. Die Vorsprung-Vertiefung-Kombinationen 55, 58 bzw. 57, 56 an den beiden Trennflächen jeder Halbschale 50 sind insbesondere im Bereich der Innengewindeabschnitte 51 ausgebildet, so dass die beiden Halbschalen 50 insbesondere im Bereich des Innengewindes sicher zusammengehalten werden.

Von der Außenwand der beiden Halbschalen 50 steht ein in Umfangsrichtung umlaufender Vorsprung 59 radial hervor, welcher bei Hineindrücken der zusammengesetzten Halbschalen 50 in das Gehäuse 10 in eine entsprechende (nicht gezeigte) in Umfangsrichtung umlaufende Ausnehmung in der Innenwand des Gehäuses 10 einrastet und somit die Halbschalen 50 axialfest, jedoch drehbar in dem Gehäuse 10 hält.

Dabei ist aus Figur 16 auch ersichtlich, dass bei einem Drehen der Halbschalen 50 ein dadurch auf die Halbschalen 50 ausgeübtes Kippmoment nur noch im Bereich dieses umlaufenden radialen Vorsprungs 59 am äußeren Ende der Halbschalen 50 in dem Gehäuse 10 abgefangen wird. Ansonsten kann der Grenzbereich zu dem Gehäuse 10 komplett als Reibfläche genutzt werden, was insbesondere deshalb vorteilhaft ist, da dann eine Trennkante für ein entsprechendes Fertigungswerkzeug nicht mehr exakt auf der Reibfläche verlaufen muss, da hierzu ein größerer Freiraum 60 zur Verfügung steht.

Die Halbschalen 50 können aus Polyoxymethylen (POM) gefertigt sein, welches ein sehr guter Gleitpartner für Polybutylenterephthalat (PBT) ist, aus dem die Gewindespindel 70 vorzugsweise gefertigt ist. PBT ermöglicht beim Verstellen der Gewindespindel 70 in den Halbschalen 50 eine sehr hohe Präzision.

Wie aus Figur 17 und Figur 18 ersichtlich ist, weisen die Halbschalen 50 an der Außenseite ihres Längsendes im Bereich des Hohlraums 54 (vgl. Figur 16) Aussparungen oder Rillen 62 auf, welche zur Befestigung bzw. zum Aufpressen eines (nicht gezeigten) Handrads dienen. Wie bereits erläutert worden ist, werden die beiden Halbschalen 50 nach Einsetzen der Gewindespindel 70 usammengefügt, um anschließend die Halbschalen 50 mit der darin befindlichen Gewindespindel 70 in das Gehäuse 10 hineinzudrücken und dort zu verrasten. Die Halbschalen 50 werden in diesem Fall axialfest, jedoch drehbar in dem Gehäuse 10 gehalten, während die Gewindespindel 70 über ihr Außengewinde 73 mit dem Innengewinde 53 der Halbschalen 50 in Gewindeeingriff steht und demzufolge in den Halbschalen 50 und in dem Gehäuse 10 in axialer Richtung verschiebbar ist. Nachdem jedoch die nasenartigen Vorsprünge 78 der Gewindespindel 70 in die Führungsnuten 17 des Gehäuses 10 eingreifen, ist die Gewindespindel 70 in dem Gehäuse 10 drehfest gelagert. Dies hat zur Folge, dass bei einem Verdrehen der Halbschalen 50 mit Hilfe des zuvor beschriebenen Handrads die Gewindespindel 70 abhängig von dem Drehsinn und abhängig von dem Umfang der Drehung mehr oder weniger weit in die Halbschalen 50 und in das Gehäuse 10 hinein oder herausbewegt wird. Nachdem die Gewindespindel 70 mit dem Nippel am Drahtende der Bowdenzuganordnung gekoppelt ist, hat dies zur Folge, dass abhängig vom Drehsinn und vom Umfang der Drehung des Handrads bzw. der Halbschalen 50 der Draht der Bowdenzuganordnung mehr oder weniger weit aus der sich in der Hülse 30 an dem Gehäuse 10 abstützenden Hülle der Bowdenzuganordnung in das Gehäuse 10 hineingezogen wird.

Die Relativbewegung der Gewindespindel 70 gegenüber den Halbschalen 50 ist dabei in beiden Längsrichtungen durch entsprechend ausgestaltete Anschläge begrenzt, welche nachfolgend näher erläutert werden sollen.

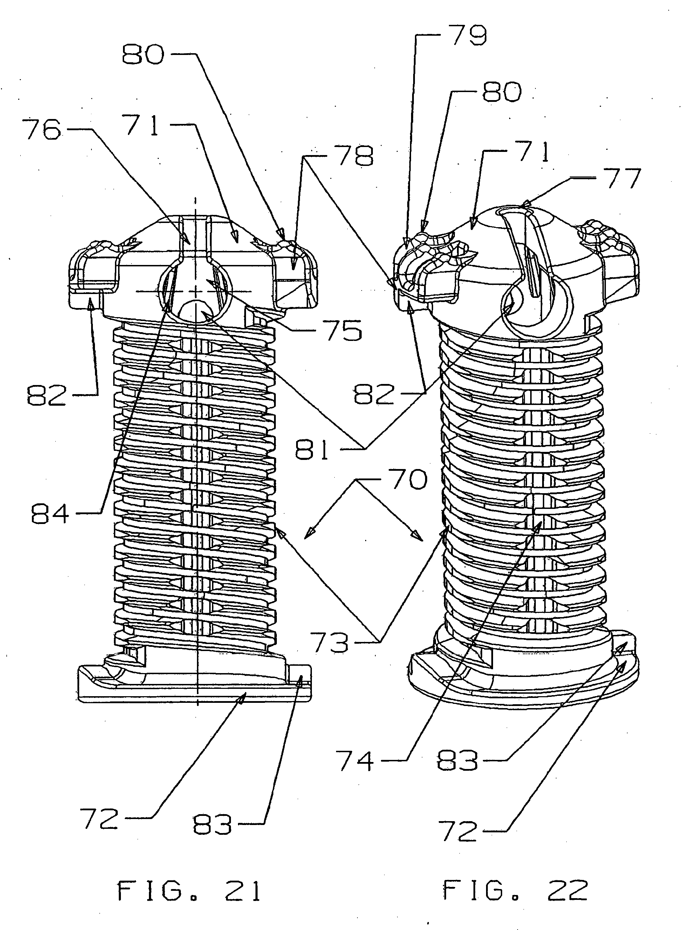

Wie aus den Darstellungen der Gewindespindel in Figur 21 - Figur 26 ersichtlich ist, umfasst die Gewindespindel 70 neben dem eigentlichen Spindelkörper mit dem bereits erwähnten Außengewinde 73 einen am oberen Ende angeordneten gewindefreien Spindelkopf 71 sowie eine am unteren Ende angeordnete gewindefreie Spindelbasis 72. Die Spindelbasis 72 ist in Form einer gegenüber dem Spindelkörper mit dem Außengewinde 73 umlaufenden Verbreiterung ausgebildet, wobei an zwei diametral gegenüberliegenden Stellen der Spindelbasis 72 Anschläge 83 ausgebildet sind. Bei dem dargestellten Ausführungsbeispiel sind diese Anschläge 83 durch Vorsprünge realisiert, deren Höhe sich allmählich in Umfangsrichtung der Gewindespindel 70 bzw. der Spindelbasis 72 wie in Figur 22 gezeigt vergrößert. Die Höhe der Vorsprünge bzw. Anschläge 83 definiert dabei in Umfangsrichtung wirkende (radiale) Anschlagflächen, während die Oberseite der Vorsprünge bzw. Anschläge 83 Anschlagflächen in axialer Richtung definieren.

Wie insbesondere aus Figur 20 ersichtlich ist, ist im Inneren jeder Halbschale 50 an dem dem Hohlraum 54 zugewandten Endabschnitt des Innengewindes 53 ein Vorsprung bzw. Anschlag 63 ausgebildet, dessen Form komplementär zu den Vorsprüngen bzw. Anschlägen 83 der Spindelbasis 72 sein kann. Bei dem dargestellten Ausführungsbeispiel ist jedoch der Vorsprung bzw. Anschlag 63 ohne eine der geneigten axialen Oberseite der Anschläge 83 entsprechende Neigung versehen. Der Vorsprung bzw. Anschlag 63 definiert wiederum zwei Anschlagflächen, nämlich eine in der Ebene der entsprechenden Trennfläche der Halbschale 50, um zusammen mit dem entsprechenden Anschlag bzw. Vorsprung 83 der Spindelbasis 72 die Relativbewegung der gewindespindel 70 gegenüber der entsprechenden Halbschale 50 in Umfangsrichtung zu begrenzen, und eine sich in die axiale Richtung der Halbschale 50 erstreckende Anschlagfläche, wobei zusammen mit der axialen Oberseite des entsprechenden Anschlags bzw. Vorsprungs 83 der Spindelbasis 72 eine Begrenzung der Relativbewegung der Gewindespindel 70 gegenüber der Halbschale 50 auch in axialer Richtung erzielt wird. Insbesondere ist durch die Verläufe der Anschlagsflächen 63 und 83 ein formschlüssiger und keilförmiger Anschlag realisiert. Analog zu den Vorsprüngen bzw. Anschlägen 83 der Spindelbasis 72 sind nach Zusammensetzen der beiden Halbschalen 50 ebenfalls zwei im Wesentlichen diametral gegenüberliegende Gegenanschläge 63 vorhanden.

Auch am oberen Ende der Gewindespindel 70 bzw. der Halbschalen 50 sind entsprechende Anschläge ausgestaltet, welche eine Relativbewegung der Gewindespindel 70 gegenüber den Halbschalen 50 sowohl in axialer Richtung als auch in Umfangsrichtung begrenzen. Dabei ist aus Figur 21 - Figur 26 ersichtlich, dass von dem Spindelkopf 71 die bereits erwähnten, diametral gegenüberliegenden nasenartigen Vorsprünge 78 hervorstehen, welche in die Führungsnuten 17 des Gehäuses 10 einzuführen sind. Diese nasenartigen Vorsprünge 78 besitzen an ihrer Unterseite Vorsprünge 82, welche die Anschläge sowohl in Umfangsrichtung als auch in axialer Richtung definieren. Aus den Darstellungen der Halbschalen 50 von Figur 16 - Figur 20 ist ersichtlich, dass am oberen Rand jeder Halbschale 50 an einem Umfangsende ein Anschlag 61 ausgebildet ist, welcher insbesondere durch eine allmählich zunehmende Vergrößerung der Höhe des Rands der entsprechenden Halbschale 50 realisiert ist. Dieser Anschlag 61 wirkt mit dem entsprechenden Anschlag 82 der Gewindespindel 70 zusammen. Insbesondere definiert der Anschlag 61 der Halbschale 50 eine Anschlagfläche in Umfangsrichtung für die entsprechende Anschlagfläche in Umfangsrichtung des Vorsprungs 82 der Gewindespindel 70, während darüber hinaus durch die Oberseite des Anschlags 61 in axialer Richtung eine entsprechende Anschlagfläche für die Anschlagfläche des Vorsprungs 82 bzw. für die Unterseite des nasenartigen Vorsprungs 78 realisiert ist. Durch die allmählich zunehmende Höhe dieser axialen Anschlagfläche des Anschlags 61 der Halbschale 50 wird zudem ein formschlüssiger und keilförmiger Anschlag in axialer Richtung realisiert. Nach Zusammensetzen der Halbschalen 50 sind zwei im Wesentlichen diametral gegenüberliegende Anschläge 61 entsprechend den ebenfalls im Wesentlichen diametral gegenüberliegenden Anschlägen 82 der Gewindespindel 70 ausgebildet.

Aus der vorhergehenden Beschreibung ist ersichtlich, dass die Anschläge und Gegenanschläge der Halbschalen 50 und der Gewindespindel 70 jeweils in gewindefreien Abschnitten der Halbschalen 50 bzw. der Gewindespindel 70 ausgebildet sind.

Die nasenartigen Vorsprünge 78 des Spindelkopfs 71 weisen mehrere in Umfangsrichtung benachbart angeordnete wellenartige Rippen 79 auf, wobei jede dieser Rippen 79 eine sich in axialer Richtung erstreckende Erhebung 80 besitzt. Durch diese filigrane Ausbildung der nasenartigen Vorsprünge 78 kann erzielt werden, dass jede Rippe 79 eine Linienlast aufnehmen kann. Die Rippen 79 dienen als Versteifungsrippen, um auch einen reibschlüssigen Kraftanteil abzufangen, und unterstützen somit einen formschlüssigen Anschlag der Gewindespindel 78 im Inneren des Gehäuses 10 an dessen stirnseitigen Ende. Diese filigrane Ausbildung der nasenartigen Vorsprünge 78 ist insbesondere deshalb möglich, da durch die zuvor beschriebene Ausgestaltung der Anschläge der Halbschalen 50 und der Gewindespindel 70 mit Anschlagflächen, welche sowohl in Umfangsrichtung als auch in axialer Richtung wirken, selbst bei einem Missbrauch bzw. bei Aufbringen einer unzulässig hohen Verstellkraft eine Beschädigung oder sogar ein Abreißen der nasenartigen Vorsprünge 78 zuverlässig verhindert werden kann.

Aus den Darstellungen der Gewindespindel in Figur 21 - Figur 24 ist ersichtlich, dass das Außengewinde 73 der Gewindespindel 70 nicht vollständig umlaufend ausgebildet ist. Stattdessen sind in Längsrichtung der Gewindespindel verlaufende gewindefreie Abschnitte 74 in Form von Rillen vorgesehen, welche das Außengewinde 73 in drei im Wesentlichen gleich große und in Umfangsrichtung der Gewindespindel gleichmäßig angeordnete bzw. beabstandete Gewindeteilabschnitte unterteilen. Diese Gewindeteilabschnitte besitzen somit in Längsrichtung der Gewindespindel im Wesentlichen eine gleiche Länge und in Umfangsrichtung der Gewindespindel im Wesentlichen eine gleiche Breite, das heißt sie erstrecken sich im Wesentlichen über einen gleichen Winkel. Durch diese Drittelung des Außengewindes 73 der Gewindespindel 70 kann erzielt werden, dass ein Fertigungswerkzeug zur Fertigung der Gewindespindel 73 im Bereich der gewindefreien Abschnitte 74 schließen kann, wobei darüber hinaus durch den gewählten Dreibein-Ansatz einer ausreichende Stabilität der Gewindespindel innerhalb der Halbschalen 50 gewährleistet ist.

Der Spindelkopf 72 umfasst in seiner Seitenwand die bereits erwähnte radiale Öffnung 75 zum Einsetzen des Nippels des Drahts der Bowdenzuganordnung, wobei die radiale Öffnung mit dem ebenfalls in der Seitenwand ausgebildeten Schlitz 76 mit der an der Stirnseite der Gewindespindel ausgebildeten axialen Öffnung 77 in Verbindung steht, so dass nach Einsetzen des Nippels des Drahts der Bowdenzuganordnung durch die radiale Öffnung 14 in der Seitenwand des Gehäuses 10 und die radiale Öffnung 75 in der Seitenwand des Spindelkopfs 71 der Draht entlang der Schlitze 15 und 76 in die axialen Öffnungen 13 und 77 des Gehäuses 10 bzw. der Gewindespindel 70 bewegt werden kann, um somit den Draht in axialer Richtung aus der Gewindespindel 70 und dem Gehäuse 10 nach außen zu führen. Der Nippel des Drahts ist dabei in dem im Inneren der Gewindespindel 70 definierten Innenraum gehalten.

Wie insbesondere Figur 21, Figur 22 und Figur 25 entnommen werden kann, sind im Inneren des Spindelkopfs 71 mehrere in Längsrichtung entlang der Innenwand des Spindelkopfs 71 verlaufende Rippen 84 vorgesehen, wobei bei dem dargestellten Ausführungsbeispiel insbesondere vier derartige Rippen 84 vorgesehen sind, welche gleichmäßig entlang des Umfangs der Innenwand des Spindelkopfs 71 verteilt sind. Diese Rippen 84 dienen dazu, den Draht bzw. den an dem entsprechenden Drahtende angebrachten Nippel innerhalb der axialen Öffnung 77 derart zu positionieren, dass ein Anliegen des Nippels an der Innenwand des Spindelkopfs 71 verhindert wird, was ansonsten Reibungsverluste zur Folge hätte. Insbesondere sind die Rippen 84 derart ausgestaltet, dass der Nippel bzw. der Draht im Wesentlichen mittig in der axialen Öffnung 77 gehalten wird. Auf diese Weise ist auch sichergestellt, dass eine Verstellung der Gewindespindel 70 möglichst exakt in axialer Richtung auf den Draht der Bowdenzuganordnung übertragen wird, so das ein Verkippen der Gewindespindel 70 innerhalb des Gehäuses 10 bzw. innerhalb der Halbschalen 50 vermieden werden kann.

Auf der gegenüberliegenden Seite der radialen Öffnung 75 ist in der Seitenwand des Spindelkopfs 71 eine weitere radiale Öffnung 81 in Form eines etwas kleineren Lochs ausgebildet, welche einen Eingriff eines Fertigungswerkzeugs zur Herstellung der Gewindespindel ermöglicht. Bei der Fertigung der Gewindespindel ist eine möglichst konzentrische Lage der Spindel gegenüber dem Fertigungswerkzeug erforderlich. Die radialen Öffnungen 81 und 75 ermöglichen, dass während des Einschiebens eines Schiebers des Fertigungswerkzeugs in den Innenraum der Spindel während deren Fertigung die Spindel zuverlässig in Position gehalten werden kann. Dies ermöglicht eine filigrane Fertigung der Gewindespindel 70.

## Patentansprüche

1. Verstellvorrichtung für eine Bowdenzuganordnung,
mit einem Gehäuse (10),
mit einem ersten Gewindeteil (70), welches in dem Gehäuse (10) drehfest und axial beweglich geführt und mit der Bowdenzuganordnung zu koppeln ist, und
mit einem zweiten Gewindeteil (50), welches in dem Gehäuse (10) axialfest und drehbar angeordnet ist und sich mit dem ersten Gewindeteil (70) in Gewindeeingriff befindet,
wobei das erste Gewindeteil (70) und das zweite Gewindeteil (50) jeweils in Gewindeeingriff miteinander stehende Gewindeabschnitte (73; 53) aufweisen,
wobei das erste Gewindeteil (70) und das zweite Gewindeteil (50) jeweils an einem sich an den jeweiligen Gewindeabschnitt (73; 53) anschließenden gewindefreien Abschnitt einen Anschlag (82, 83; 61, 63) für das jeweils andere Gewindeteil aufweisen,
wobei ein Gewindeteil der ersten und zweiten Gewindeteile eine Gewindespindel (70) mit einem Außengewinde (73) und das andere Gewindeteil der ersten und zweiten Gewindeteile im Wesentlichen hohlzylinderförmig mit einem Innengewinde (53) ist, wobei das Außengewinde (73) der Gewindespindel (70) sich in Gewindeeingriff mit dem Innengewinde (53) des anderen hohlzylinderförmigen Gewindeteils (50) befindet, und
wobei die Gewindespindel (70) an einem gewindefreien Endabschnitt (71) mindestens einen nasenartigen Vorsprung (78) besitzt, welcher mindestens eine Anschlagfläche definiert,
**dadurch gekennzeichnet,**
**dass** der mindestens eine nasenartige Vorsprung (78) mit mindestens einer Rippe (79) versehen ist,
wobei die mindestens eine Rippe (79) an einer Oberseite des mindestens einen nasenartigen Vorsprungs (78) und die mindestens eine Anschlagfläche an einer Unterseite des mindestens einen nasenartigen Vorsprungs (78) ausgebildet ist.

2. Verstellvorrichtung nach Anspruch 1,
**dadurch gekennzeichnet,**
**dass** die Anschläge (82, 83; 61, 63) des ersten und zweiten Gewindeteils (70;50) eine Bewegung zwischen dem ersten und zweiten Gewindeteil sowohl in Umfangsrichtung als auch in axialer Richtung der Verstellvorrichtung begrenzen.

3. Verstellvorrichtung nach Anspruch 1 oder Anspruch 2,
**dadurch gekennzeichnet,**
**dass** die Gewindespindel (70) an einem gewindefreien Endabschnitt (82) mindestens einen Vorsprung (83), welcher mindestens eine Anschlagfläche definiert, aufweist.

4. Verstellvorrichtung nach Anspruch 3,
**dadurch gekennzeichnet,**
**dass** der mindestens eine Vorsprung (83) an dem gewindefreien Endabschnitt (82) der Gewindespindel (70) sowohl eine in Umfangsrichtung der Gewindespindel (70) wirksame Anschlagfläche als auch eine in axialer Richtung der Gewindespindel (70) wirksame Anschlagfläche definiert.

5. Verstellvorrichtung nach Anspruch 3 oder 4,
**dadurch gekennzeichnet,**
**dass** die Höhe des mindestens einen Vorsprungs (83) an dem gewindefreien Endabschnitt (82) der Gewindespindel (70) sich allmählich in Umfangsrichtung der Gewindespindel (70) vergrößert.

6. Verstellvorrichtung nach einem der Ansprüche 3-5.
**dadurch gekennzeichnet,**
**dass** die Gewindespindel (70) an dem gewindefreien Endabschnitt (82) mindestens zwei diametral gegenüberliegende Vorsprünge (83) als Anschläge besitzt.

7. Vertellvorrichtung nach einem der vorhergehenden Ansprüche,
**dadurch gekennzeichnet,**
**dass** der mindestens eine nasenartige Vorsprung (78) des gewindefreien Endabschnitts (71) der Gewindespindel (70) sowohl eine in Umfangsrichtung der Gewindespindel (70) wirksame Anschlagfläche als auch eine in axialer Richtung der Gewindespindel (70) wirksame Anschlagfläche definiert.

8. Verstellvorrichtung nach einem der vorhergehenden Ansprüche,
**dadurch gekennzeichnet,**
**dass** die mindestens eine Rippe (79) mindestens eine Erhebung (80) aufweist.

9. Verstellvorrichtung nach Anspruch 8,
**dadurch gekennzeichnet,**
**dass** die mindestens eine Erhebung (80) der mindestens einen Rippe (79) in axialer Richtung der Gewindespindel (70) gerichtet ist, so dass die mindestens eine Rippe (79) mit der mindestens einen Erhebung (80) als ein Anschlag gegenüber einer Innenwand des Gehäuses (10) wirkt.

10. Verstellvorrichtung nach einem der vorhergehenden Ansprüche,
**dadurch gekennzeichnet,**
**dass** die Gewindespindel (70) mindestens zwei diametral gegenüberliegende nasenartige Vorsprünge (78) mit jeweils mehreren in Umfangsrichtung der Gewindespindel nebeneinander angeordneten wellenartigen Rippen (79) aufweist.

11. Verstellvorrichtung nach einem der vorhergehenden Ansprüche,
**dadurch gekennzeichnet,**
**dass** das im Wesentlichen hohlzylinderförmige Gewindeteil (50) an einem gewindefreien Endabschnitt mindestens einen Vorsprung (61) mit sich allmählich in Umfangsrichtung vergrößernder Höhe aufweist, wobei der mindestens eine Vorsprung (61) sowohl eine in Umfangsrichtung wirksame Anschlagfläche als auch eine in axialer Richtung wirksame Anschlagfläche definiert.

12. Verstellvorrichtung nach einem der vorhergehenden Ansprüche,
**dadurch gekennzeichnet,**
**dass** die Anschläge (82, 83; 61, 63) des ersten Gewindeteils (70) und des zweiten Gewindeteils (50) derart ausgestaltet sind, dass zwischen dem ersten Gewindeteil (70) und dem zweiten Gewindeteil (50) formschlüssige Anschlagfläche durch die Anschläge definiert sind.

13. Verstellvorrichtung nach einem der vorhergehenden Ansprüche,
**dadurch gekennzeichnet,**
**dass** das hohlzylinderförmige zweite Gewindeteil (50) durch zwei Halbschalen gebildet ist, wobei an Innenwänden der Halbschalen Gewindeteilabschnitte (53) des Innengewindes des zweiten Gewindeteils ausgebildet sind.

14. Verstellvorrichtung nach Anspruch 13,
**dadurch gekennzeichnet,**
**dass** die beiden Halbschalen (50) durch Vorsprünge (59), welche von Außenseiten der Halbschalen (50) hervorstehen, in dem Gehäuse (10) axialfest gehalten sind.

15. Verstellvorrichtung nach einem der vorhergehenden Ansprüche,
**dadurch gekennzeichnet,**
**dass** das Gehäuse (10) und das erste Gewindeteil (70) jeweils eine in einer entsprechenden Seitenwand ausgebildete Öffnung (14; 75) und eine an einem entsprechenden Längsende ausgebildete axiale Öffnung (13; 77), welche über einen in der entsprechenden Seitenwand ausgebildeten Schlitz (15; 76) mit der in der entsprechenden Seitenwand ausgebildeten Öffnung (14; 75) in Verbindung stehen, aufweisen.

16. Verstellvorrichtung nach einem der vorhergehenden Ansprüche,
**dadurch gekennzeichnet,**
**dass** das zweite Gewindeteil (50) mit einem Betätigungselement zum Drehen des zweiten Gewindeteils (50) in dem Gehäuse (10) koppelbar ist.

17. Verstellvorrichtung nach einem der vorhergehenden Ansprüche,
**dadurch gekennzeichnet,**
**dass** das Gehäuse (10) aus einem Polyamid-Kunststoff gefertigt ist.

18. Verstellvorrichtung nach einem der vorhergehenden Ansprüche,
**dadurch gekennzeichnet,**
**dass** das erste Gewindeteil (70) aus einem Polybutylenterephthalat-Kunststoff gefertigt ist.

19. Verstellvorrichtung nach einem der vorhergehenden Ansprüche,
**dadurch gekennzeichnet,**
**dass** das zweite Gewindeteil (50) aus einem Polyoxymethylen-Kunststoff gefertigt ist.

## Claims

1. Adjusting device for a Bowden cable arrangement
with a housing (10),
with a first threaded part (70), which is guided in the housing (10) such as to be torsionally resistant and axially movable, and which is to be coupled to the Bowden cable arrangement, and
with a second threaded part (50), which is arranged in an axially resistant and rotatable manner in the housing (10) and is in threaded engagement with the first threaded part (70),
wherein the first threaded part (70) and the second threaded part (50) each have thread sections (73; 53) which are in threaded engagement with one another, wherein the first threaded part (70) and the second threaded part (50) each have a stop (82, 83; 61, 63) for the other threaded part at a thread-free section adjoining the respective threaded section (73; 53),
wherein one threaded part of the first and second threaded parts is a threaded spindle (70) with an outer thread (73) and the other threaded part of the first and second threaded parts is substantially a hollow cylinder in form with an inner thread (53) which is in threaded engagement with the outer thread (73) of the threaded spindle, and
wherein the threaded spindle (70) has at least one nose-shaped projection (78) at a thread-free end section (71), which defines at least one stop surface, **characterized in that**
the at least one nose-shaped projection (78) is provided with at least one rib (79), wherein the at least one rib (79) is formed at an upper side of the at least one nose-shaped projection (78) and the at least one stop surface is formed at an under side of the at lest one nose-shaped projection (78).

2. Adjusting device according to claim 1,
**characterized in that**
the stops (82, 83; 61, 63) of the first and second threaded parts (70; 50) delimit a movement between the first and second threaded parts in both the circumferential direction and the axial direction of the adjusting device.

3. Adjusting device according to claim 1 or claim 2,
**characterized in that**
the threaded spindle (70) has at a thread-free end section (82) at least one projection (83) which defines at least one stop surface.

4. Adjusting device according to claim 3,
**characterized in that**
the at least one projection (83) at the thread-free end section (82) of the threaded spindle (70) defines both a stop surface which is effective in the circumferential direction of the threaded spindle (70) and a stop surface which is effective in the axial direction of the threaded spindle (70).

5. Adjusting device according to claim 3 or claim 4,
**characterized in that**
the height of the at least one projection (83) at the thread-free end section (82) of the threaded spindle (70) increases gradually in the circumferential direction of the threaded spindle (70).

6. Adjusting device according to any one of claims 3-5,
**characterized in that**
the threaded spindle (70) has at least two diametrically-opposed projections (83) as stops at the thread-free end section (82).

7. Adjusting device according to any one of the preceding claims, **characterized in that**
the at least one nose-shaped projection (78) of the thread-free end section (71) of the threaded spindle (70) defines both a stop surface which is effective in the circumferential direction of the threaded spindle (70) and a stop surface which is effective in the axial direction of the threaded spindle (70).

8. Adjusting device according to any one of the preceding claims, **characterized in that**
the at least one rib (79) has at least one elevation (80).

9. Adjusting device according to claim 8,
**characterized in that**
the at least one elevation (80) of the at least one rib (79) is directed in the axial direction of the threaded spindle (70), so that the at least one rib (79) with the at least one elevation (80) acts as a stop against an inner wall of the housing (10).

10. Adjusting device according to any one of the preceding claims, **characterized in that**
the threaded spindle (70) has at least two diametrically-opposed nose-shaped projections (78) which each have several wave-shaped ribs (79) arranged next to one another in the circumferential direction of the threaded spindle.

11. Adjusting device according to any one of the preceding claims, **characterized in that**
the second threaded part (50), which is substantially in the form of a hollow cylinder, has at least one projection (61) at a thread-free end section with its height gradually increasing in the circumferential direction, wherein the at least one projection (61) defines both a stop surface which is effective in the circumferential direction and a stop surface which is effective in the axial direction.

12. Adjusting device according to any one of the preceding claims, **characterized in that**
the stops (82, 83; 61, 63) of the first threaded part (70) and the second threaded part (50) are designed such that positive-fit stop surfaces are defined by the stops between the first threaded part (70) and the second threaded part (50).

13. Adjusting device according to any one of the preceding claims, **characterized in that**
the second threaded part (50) in the form of a hollow cylinder is formed by two half-shell elements, wherein threaded part sections (53) of the inner thread of the second threaded part are formed at inner walls of the half-shell elements.

14. Adjusting device according to Claim 13,
**characterized in that**
the two half-shell elements (50) are held in an axially secure manner in the housing (10) by projections (59) which project from outer sides of the half-shell elements (50).

15. Adjusting device according to any one of the preceding claims, **characterized in that**
the housing (10) and the first threaded part (70) each have an opening (14; 75) formed in a corresponding side wall and an axial opening (13; 77) formed at a corresponding longitudinal end, which are connected via a slot (15; 76) formed in the corresponding side wall with the opening (14; 75) formed in the corresponding side wall.

16. Adjusting device according to any one of the preceding claims, **characterized in that**
the second threaded part (50) can be coupled to an actuating element for rotating the second threaded part (50) in the housing (10).

17. Adjusting device according to any one of the preceding claims, **characterized in that**
the housing (10) is made of a polyamide plastic.

18. Adjusting device according to any one of the preceding claims, **characterized in that**
the first threaded part (70) is made of a polybutylene terephthalate plastic.

19. Adjusting device according to any one of the preceding claims, **characterized in that**
the second threaded part (50) is made of a polyoxymethylene plastic.

## Revendications

1. Dispositif de réglage pour un ensemble à câble Bowden,
comportant un boîtier (10),
comportant une première pièce filetée (70), laquelle est fixe en rotation et mobile axialement dans le boîtier (10) et est à accoupler avec l'ensemble à câble Bowden, et
comportant une deuxième pièce filetée (50), laquelle est axialement fixe et mobile en rotation dans le boîtier (10) et se trouve en prise avec le filet de la première pièce filetée (70),
la première pièce filetée (70) et la deuxième pièce filetée (50) présentant respectivement des segments filetés (73 ; 53) dont les filets se trouvent en prise les uns avec les autres,
la première pièce filetée (70) et la deuxième pièce filetée (50) présentant respectivement, au niveau d'un segment dépourvu de filet se raccordant au segment fileté (73 ; 53) respective, une butée (82, 83 ; 61, 63) pour l'autre pièce filetée respective,
une partie filetée de la première pièce filetée et de la deuxième pièce filetée étant une tige filetée (70) avec un filet extérieur (73) et l'autre partie filetée de la première pièce filetée et de la deuxième pièce filetée étant essentiellement en forme de cylindre creux avec un filet intérieur (53), le filet extérieur (73) de la tige filetée (70) se trouvant en prise avec le filet intérieur (53) de l'autre pièce filetée (50) en forme de cylindre creux, et
la tige filetée (70) comportant, au niveau d'un segment d'extrémité (71) dépourvu de filet, au moins une saillie (78) en forme d'ergot, laquelle définit au moins une surface de butée,
**caractérisé en ce**
**que** la saillie (78) en forme d'ergot au moins au nombre de une est pourvue d'au moins une nervure (79),
la nervure (79) au moins au nombre de une étant réalisée au niveau d'un côté supérieur de la saillie (78) en forme d'ergot au moins au nombre de une et la surface de butée au moins au nombre de une étant réalisée au niveau d'un côté inférieur de la saillie (78) en forme d'ergot au moins au nombre de une.

2. Dispositif de réglage selon la revendication 1, **caractérisé**
**en ce que** les butées (82, 83 ; 61, 63) de la première pièce filetée et de la deuxième pièce filetée (70, 50) délimitent un mouvement entre la première pièce filetée et la deuxième pièce filetée aussi bien dans la direction périphérique que dans la direction axiale du dispositif de réglage.

3. Dispositif de réglage selon la revendication 1 ou la revendication 2,
**caractérisé**
**en ce que** la tige filetée (70) présente, au niveau d'un segment d'extrémité (82) dépourvu de filet, au moins une saillie (83), qui définit au moins une surface de butée.

4. Dispositif de réglage selon la revendication 3, **caractérisé**
**en ce que** la saillie (83) au moins au nombre de une définit, au niveau du segment d'extrémité (82) dépourvu de filet, de la tige filetée (70), aussi bien une surface de butée active dans la direction périphérique de la tige filetée (70) qu'une surface de butée active dans la direction axiale de la tige filetée (70).

5. Dispositif de réglage selon la revendication 3 ou la revendication 4,
**caractérisé**
**en ce que** la hauteur de la saillie (83) au moins au nombre de une au niveau du segment d'extrémité (82), dépourvu de filet, de la tige filetée (70) s'agrandit progressivement dans la direction périphérique de la tige filetée (70).

6. Dispositif de réglage selon l'une des revendications 3 à 5,
**caractérisé**
**en ce que** la tige filetée (70) comporte en tant que butées, au niveau du segment d'extrémité (82) dépourvu de filet, au moins deux saillies (83) diamétralement opposées.

7. Dispositif de réglage selon l'une des revendications précédentes,
**caractérisé**
**en ce que** la saillie (78) en forme d'ergot au moins au nombre de une du segment d'extrémité (71) dépourvu de filet de la tige filetée (70) définit aussi bien une surface de butée active dans la direction périphérique de la tige filetée (70) qu'une surface de butée active dans la direction axiale de la tige filetée (70).

8. Dispositif de réglage selon l'une des revendications précédentes,
**caractérisé**
**en ce que** la nervure (79) au moins au nombre de une présente au moins une bosse (80).

9. Dispositif de réglage selon la revendication 8, **caractérisé**
**en ce que** la bosse (80) au moins au nombre de une de la nervure (79) au moins au nombre de une est orientée dans la direction axiale de la tige filetée (70) de sorte que la nervure (79) au moins au nombre de une comprenant la bosse (80) au moins au nombre de une agit comme une butée par rapport à la paroi intérieure du boîtier (10).

10. Dispositif de réglage selon l'une des revendications précédentes,
**caractérisé**
**en ce que** la tige filetée (70) présente au moins deux saillies (78) en forme d'ergot diamétralement opposées avec respectivement plusieurs nervures (79) ondulées disposées les unes à côté des autres dans la direction périphérique de la tige filetée.

11. Dispositif de réglage selon l'une des revendications précédentes,
**caractérisé**
**en ce que** la pièce filetée (50) essentiellement en forme de cylindre creux définit, au niveau d'un segment d'extrémité dépourvu de filet, au moins une saillie (61) présentant une hauteur s'agrandissant progressivement dans la direction périphérique, la saillie (61) au moins au nombre de une définissant aussi bien une surface de butée active dans la direction périphérique qu'une surface de butée active dans la direction axiale.

12. Dispositif de réglage selon l'une des revendications précédentes,
**caractérisé**
**en ce que** les butées (82, 83 ; 61, 63) de la première partie filetée (70) et de la deuxième partie filetée (50) sont configurées de telle manière que des surfaces de butée présentant une complémentarité de forme sont définies par les butées entre la première pièce filetée (70) et la deuxième pièce filetée (50).

13. Dispositif de réglage selon l'une quelconque des revendications précédentes,
**caractérisé**
**en ce que** la deuxième pièce filetée (50) en forme de cylindre creux est composée de deux demi-coques, des segments de pièce filetée (53) du filet intérieur de la deuxième pièce filetée étant formés sur les parois intérieures des demi-coques.

14. Dispositif de réglage selon la revendication 13, **caractérisé**
**en ce que** les deux demi-coques (50) sont maintenues de manière axialement fixe dans le boîtier (10) par des saillies (59) dépassant des faces extérieures des demi-coques (50).

15. Dispositif de réglage selon l'une des revendications précédentes,
**caractérisé**
**en ce que** le boîtier (10) et la première pièce filetée (70) présentent respectivement une ouverture (14 ; 75) ménagée dans une paroi latérale correspondante et une ouverture axiale (13 ; 77) ménagée sur une extrémité longitudinale correspondante, laquelle est reliée à l'ouverture (14 ; 75) ménagée dans la paroi latérale correspondante par une fente (15 ; 76) ménagée dans la paroi latérale correspondante.

16. Dispositif de réglage selon l'une des revendications précédentes,
**caractérisé**
**en ce que** la deuxième pièce filetée (50) peut être accouplée avec un élément d'actionnement pour la rotation de la deuxième pièce filetée (50) dans le boîtier (10).

17. Dispositif de réglage selon l'une des revendications précédentes,
**caractérisé**
**en ce que** le boîtier (10) est fabriqué dans une matière synthétique polyamide.

18. Dispositif de réglage selon l'une des revendications précédentes,
**caractérisé**
**en ce que** la première pièce filetée (70) est fabriquée dans une matière synthétique polybutylène téréphtalate.

19. Dispositif de réglage selon l'une des revendications précédentes,
**caractérisé**
**en ce que** la deuxième pièce filetée (50) est fabriquée dans une matière synthétique polyoxyméthylène.
